# EUROPÄISCHE PATENTANMELDUNG

(11) **EP 0 797 013 A1**
(43) Veröffentlichungstag der Anmeldung: **24.09.1997**
(21) Anmeldenummer: 97104729.5
(22) Anmeldetag: 20.03.1997
(51) Int. Cl.: F16B 37/04

(54) **Montagescheibe mit Federwirkung und Abstandshaltung**

(30) Priorität: 20.03.1996 DE 19610898
(71) Anmelder: Hecralmat, 9494 Schaan (LI)
(72) Erfinder: Pirchl, Gerhard, 6708 Birrwil (CH)
(74) Vertreter: Riebling, Peter, Dr.-Ing.

(57) **Zusammenfassung**

Die Erfindung betrifft eine Montagescheibe (6) mit Federwirkung und Abstandshaltung bestehend aus mindestens einer ersten, auf dem zu befestigenden Teil kraftschlüssig aufliegenden Bodenscheibe, einen mit einer Körperfläche (1) verbundenen und von dieser senkrecht abstehenden Montagedorn (3) und einem, mittels einer Montagescheibe auf dieser Körperfläche festgelegten Befestigungsteil (2), wobei sich die Montagescheibe (6) mit Federlappen (4) rastend und unter Vorspannung an dem Montagedorn (3) gegenüber dem Befestigungsteil (2) und der Körperfläche (1) abstützt, wobei mindestens teilweise am Außenumfang der ersten Bodenscheibe ausgehend Federschenkel (9) angeordnet sind, die mit einer zweiten, im vertikalen Abstand zur ersten Bodenscheibe (7) angeordneten, zweiten Federscheibe (8) verbunden sind, und daß mindestens an der zweiten Federscheibe (8) die sich an dem Montagedorn (3) abstützenden Federlappen (11) angeordnet sind, wobei die derart mit der ersten Bodenscheibe (7) verbundene Federscheibe mit einem, über einen Biegestreifen angeordneten, unter die Bodenfläche der Federscheibe faltbaren und dadurch eine das Befestigungsteil (2) aufnehmende Einschubtasche (5) ausbildenden Lappen angeordnet ist, wodurch das Befestigungsteil (2) zwischen den beiden Flächen (7,8) der Federscheibe abstandshaltend zu der Körperfläche (1) befestigt ist.

## Beschreibung

Die Erfindung betrifft eine Montagescheibe mit Federwirkung und Abstandshalterung nach dem Oberbegriff des Patentanspruchs 1.

Montagescheiben mit Federwirkung ohne Abstandshalterung werden in großer Zahl insbesondere im Fahrzeugbau eingesetzt. Es handelt sich um ein Schnellmontageelement, mit dem schnell und auf einfache Weise ein Befestigungsteil auf einer Körperoberfläche festgelegt werden soll. Hierbei wird vorausgesetzt, daß auf der Körperoberfläche (z.B. einem Karosserieblech, einer Gehäusewandung oder dergleichen) ein Montagedorn befestigt wird, der etwa senkrecht von der Körperoberfläche absteht und der in vertikaler Richtung untereinanderliegende Nuten aufweist, die von Vorsprüngen größeren Druchmessers abgewechselt werden.

Die in der DE 196 07 000.7 beschriebene Montagescheibe mit Federwirkung mit mindestens einer ersten, auf dem zu befestigenden Teil kraftschlüssig aufliegenden Bodenscheibe, wobei ein mit der Körperfläche verbundener Montagedorn etwa senkrecht von dieser Körperoberfläche absteht und ein Befestigungsteil auf dieser Körperfläche mittels der Montagescheibe festgelegt ist, wobei sich die Montagescheibe mit Federlappen rastend und unter Vorspannung an dem Montagedorn gegenüber dem Befestigungsteil und der Körperoberflache abstützt, weist als wesentliches Merkmal auf, daß nun etwa parallel zur ersten Montagescheibe eine zweite Federscheibe angeordnet ist, die sich im vertikalen Abstand oberhalb der vorgenannten, bekannten Bodenscheibe befindet und daß sich an dieser Federscheibe ebenfalls Federlappen befinden, die in Rasteingriff mit den Nuten des Montagedorns kommen.

Mit der Anordnung einer weiteren Federscheibe, die im vertikalen Abstand oberhalb der bekannten Bodenscheibe angeordnet ist, besteht nun die Möglichkeit, daß ein einstellbares Anpreßmoment zwischen der Montagescheibe und dem Befestigungsteil erreicht werden kann.

Der Nachteil dieser Montagescheibe mit Federwirkung liegt darin begründet, daß das Befestigungsteil in Direktkontakt mit der Befestigungsfläche steht und damit die Einsatzmöglichkeit dieser Montagescheibe für spezielle Zwecke, wie beispielsweise bei einem Aluminium-Eisenlegierungs-Verbund, nicht gegeben ist.

Der Erfindung liegt deshalb die Aufgabe zugrunde, eine Montagescheibe der eingangs genannten Art so weiterzubilden, daß sie auch für die notwendige spezielle Befestigungsart von Metallmaterialien/-Legierungen geeignet ist.

Zur Lösung der gestellten Aufgabe ist die Erfindung durch die technische Lehre des Anspruchs 1 gekennzeichnet.

Wesentliches Merkmal der Erfindung ist, daß nun die Federscheibe der Montagescheibe mit einem zusätzlichen Lappen verbunden ist, der unter die Bodenfläche der Federscheibe gefaltet wird, so daß zwischen der Bodenfläche der Federscheibe und durch diesen im Abstand dazu angeordneten und über einen Biegestreifen mit der Federscheibe verbundenen Lappen eine Einschubtasche entsteht, in welche ein Befestigungsteil eingeschoben werden kann, welches somit zwischen diesen beiden Flächen der Federscheibe abstandhaltend aufgenommen wird.

Durch diese Einschubtaschen-Ausbildung der erfindungsgemäßen Montagescheibe ist das Befestigungsteil, beispielsweise ein Blech aus Aluminium, vorteilhafterweise nicht mehr direkt auf der, beispielsweise aus Eisen oder einer Eisenlegierung bestehenden, Körperfläche angeordnet, so daß unerwünschte Materialreaktionen, wie beispielsweise Korrosion, ausgeschlossen sind und damit ein spezieller vorteilhafter Verwendungszweck dieser erfindungsgemäßen Montagescheibe gebeben ist.

Die erfindungsgemäß mit dem zusätzlichen Lappen ausgebildete Federscheibe wirkt also gleichzeitig auch als Distanz- oder abstandshaltende Scheibe, wodurch zusätzlich zu der - bereits in der eigenen älteren Patentanmeldung DE 196 07 000.7 offenbarten ausgezeichneten Befestigung - eine vorteilhafte Abstandswirkung dieser offenbarten Montagescheibe gewährleistet ist.

Der mit der eigenen älteren Patentanmeldung DE 196 07 000.7 bereits offenbarte Erfindungsgegenstand soll vollinhaltlich in die vorliegende Erfindung mit aufgenommen sein.

Dieses betrifft insbesondere auch die Ausbildung/Anordnung der beiden Federscheiben mit in zugeordneten Nuten des Montagedorns in Rasteingriff stehenden Federlappen und der sich daraus ergebende wesentliche Vorteil des erstmals einstellbaren Anpreßmoments zwischen der Montagescheibe und dem Befestigungsteil, wodurch Materialermüdungen im Bereich der Federschenkel und der Federlappen vermieden werden und damit über die gesamte Lebensdauer eine ausreichend sichere Befestigung gewährleistet ist.

Auch die bereits in der eigenen älteren Patentanmeldung DE 196 07 000.7 enthaltenen unterschiedlichen Ausbildungsformen der zweiten Federscheibe (rechteckförmig oder konisch sich verjüngend) sind, ebenfalls wie die unterschiedliche Ausbildung der Rastkanten (gerade oder bogenförmig), bei der Ausgestaltung der vorliegenden Erfindung ausdrücklich mit einbezogen und damit im beanspruchten Schutzumfang der vorliegenden Erfindung enthalten.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in der Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von mehrere Ausführungswege darstellenden Zeichnungen näher erläutert. Hierbei gehen aus den Zeichnungen und ihrer Beschreibung weitere erfindungswesentlichen Merkmale und Vorteile der Erfindung hervor.

Es zeigen:
Figur 1: Schnitt durch eine Ausführungsform einer Montagescheibe mit in einer Einschubtasche befindlichem Befestigungsmittel;
Figur 2: Draufsicht auf eine Ausführungsform einer Feder-Scheiben-Lappen-Anordnung;
Figur 3: Schnitt durch eine Ausführungsform einer Federscheiben-Lappen-Anordnung.

Auf einer Körperoberfläche 1 ist ein Montagedorn 3 befestigt, der im gezeigten Ausführungsbeispiel werkstoffeinstückig mit der Körperoberfläche 1 verbunden ist. Es sind selbstverständlich sämtliche Befestigungsmöglichkeiten eines Montagedorns 3 auf einer Körperoberfläche 1 vom Schutzbereich der vorliegenden Erfindung umfaßt. So ist es beispielsweise möglich, den Montagedorn 3 mit der Körperoberfläche 1 zu vernieten, zu verschrauben, zu verschweißen oder in anderer Weise festzulegen.

In Abstand zu der Körperoberfläche 1 soll ein Befestigungsteil 2 kraftschlüssig festgelegt werden, hierzu dient die in den Figuren dargestelle Montagescheibe 6.

Die im wesentlichen aus den bereits in der eigenen Patentanmeldung DE 196 07 000.7 offenbarten Merkmale bestehende Montagescheibe 6 ist erfindungswesentlich durch die vorteilhafte Ausgestaltung der Federscheibe 8 geprägt, so daß die Erfindungsmerkmale dieser Federscheibe 8 schwerpunktmäßig den Gegenstand der nachfolgenden Beschreibung bilden.

Die einzelnen Merkmale der Montagescheibe 6 sind nachfolgend insoweit beschrieben, wie diese für die vorliegende Erfindungsoffenbarung notwendig und erfindungswesentlich sind.

Die Nichtbeschreibung einzelner Merkmale der Montagescheibe 6 stellt insofern keinen Verzicht auf diese dar, da diese bereits im Rahmen der eigenen Patentanmeldung DE 196 07 000.7 offenbart wurden und auch für die vorliegende Erfindung beansprucht werden.

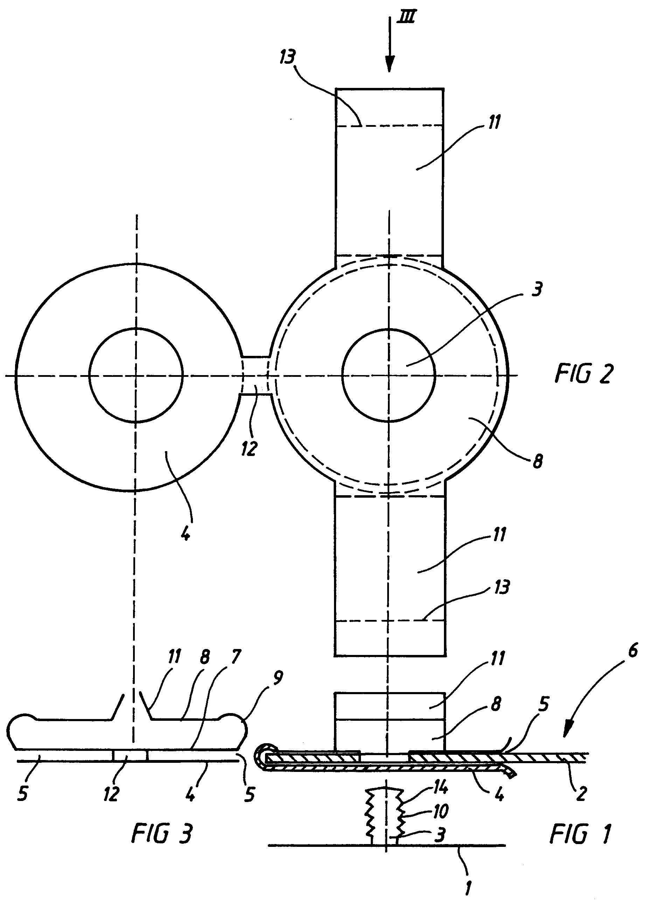

Im Ausführungsbeispiel nach Figur 1 besteht die Montagescheibe 6 im wesentlichen aus einer Bodenscheibe 7, die durch von ihrem Außenumfang ausgehenden Federschenkeln 9 mit einer Federscheibe 8 verbunden ist.

Die Federscheibe 8 ist - wie in Figur 2 dargestellt - über einen Biegestreifen 12 mit einem unter die Bodenfläche der Federscheibe 8 faltbaren, eine Einschubtasche 5 für die Aufnahme des Befestigungsteils 2 bildenden Lappen 4 verbunden.

Dabei kann der Lappen 4 rechts- oder linksseitig über den jeweiligen Biegestreifen 12 oder auch durch eine feste Verbindung, beispielsweise durch Vernieten, unterseitig an der Federscheibe 8 angeordnet sein.

Durch die in vorbeschriebener Weise ausgebildeten und aus den Figuren 1 und 3 ersichtliche Einschubtasche 5 ist das Befestigungsteil 2, beispielsweise ein Aluminiummaterial, zwischen den beiden Flächen der Federscheibe 8 abstandshaltend zu einer Körperfläche 1 befestigt.

In Figur 2 ist dargestellt, daß die Federscheibe 8 des weiteren mit zwei einander gegenüberliegenden, jeweils sich in eine, von einer Rastkante 14 begrenzten Nut 10 in einem, mit der Körperfläche 1 verbundenen und von dieser senkrecht abstehenden Montagedorn 3, abstützenden Federlappen 11 mit jeweils einer Falzkante 13 ausgebildet ist.

Hieraus ergibt sich, daß die Haltekraft allein von den Federlappen 11 ausgeübt wird, welche an der Federscheibe 8 angeordnet sind.

Anstatt der Anordnung zueinander paralleler Nuten 10, wie in Figur 1 gezeigt, kann der Montagedorn 3 auch eine schraubenförmige Nut aufweisen.

Wichtig ist, daß die Montagescheibe 6 aus einem einheitlichen Blechzuschnitt besteht.

Mit den dargestellen Ausführungsformen der Montagescheibe 6 mit Federwirkung und Abstandshaltung besteht also der wesentliche Vorteil, daß das in der Einschubtasche 5 der neuartigen Federscheibe 8 befindliche Befestigungsteil 2 abstandshaltend zu der Körperfläche 1 befestigt ist und damit kein Kontakt zwischen diesem Befestigungsteil 2 und der Körperfläche 1 gegeben ist, so daß insbesondere auch Aluminiummaterialien auf Eisen oder Eisenlegierung befestigt werden können.

### ZEICHNUNGSLEGENDE

- 1.: Körperfläche
- 2.: Befestigungsteil
- 3.: Montagedorn
- 4.: Lappen
- 5.: Einschubtasche
- 6.: Montagescheibe
- 7.: Bodenscheibe
- 8.: Federscheibe
- 9.: Federschenkel
- 10.: Nuten
- 11.: Federlappen
- 12.: Biegestreifen
- 13.: Falzkante
- 14.: Rastkante

## Patentansprüche

1. Montagescheibe mit Federwirkung und Abstandshaltung bestehend aus mindestens einer ersten, auf dem zu befestigenden Teil kraftschlüssig aufliegenden Bodenscheibe (7), einen mit einer Körperfläche (1) verbundenen und von dieser senkrecht abstehenden Montagedorn (3) und einem, mittels einer Montagescheibe (6) auf dieser Körperfläche(1) festgelegten Befestigungsteil 2), wobei sich die Montagescheibe (6) mit Federlappen (11) rastend und unter Vorspannung an dem Montagedorn (3) gegenüber dem Befestigungsteil (2) und der Körperfläche (1) abstützt, wobei mindestens teilweise vom Außenumfang der ersten Bodenscheibe (7) ausgehend Federschenkel (9) angeordnet sind, die mit einer zweiten, im vertikalen Abstand zur ersten Bodenscheibe (7) angeordneten, zweiten Federscheibe (8) verbunden sind, und daß mindestens an der zweiten Federscheibe (8) eine Anzahl von sich an dem Montagedorn (3) abstützenden Federlappen (11) angeordnet sind, **dadurch gekennzeichnet**, daß die, durch die Federschenkel (9) mit der ersten Bodenscheibe (7) verbundene und Federlappen (11) aufweisende Federscheibe (8) mit einem, über einen Biegestreifen (12) angeordneten, unter die Bodenfläche der Federscheibe (8) faltbaren und dadurch eine, das Befestigungsteil (2) aufnehmende Einschubtasche (5) ausbildenden Lappen (4) angeordnet ist, wodurch das Befestigungsteil (2) zwischen den beiden Flächen der Federscheibe (8) abstandshaltend zu der Körperfläche (1) befestigt ist.

2. Montagescheibe nach Anspruch 1 oder 2, **dadurch gekennzeichnet**, daß die zwei einander gegenüberliegenden, jeweils eine Falzkante (13) aufweisenden Federlappen (11) der Federscheibe (8) in jeweils eine, von einer zugeordneten Rastkante (14) begrenzten Nut (10) des Montagedorns (3) rastend abstützend gelagert sind.

3. Montagescheibe nach Anspruch 1, **dadurch gekennzeichnet**, daß der Lappen (4) links- oder rechtsseitig jeweils durch einen Biegestreifen (12) oder unterhalb, durch beispielsweise Vernieten, an der Federscheibe (8) angeordnet ist.

4. Montagescheibe nach Anspruch 1, **dadurch gekennzeichnet**, daß die Montagescheibe (6) aus einem einheitlichen Blechzuschnitt besteht.

5. Montagescheibe nach einem der Ansprüche 1 bis 4, **dadurch gekennzeichnet**, daß diese, mit der distanz- oder abstandshaltenden Federscheibe (8) ausgebildete Montagescheibe (6), vorzugsweise bei einem aus einem Aluminiummaterial bestehenden Befestigungsteil (2) und vorzugsweise bei einer aus Eisen oder Eisenlegierungen bestehenden Körperfläche (1) Verwendung findet.
